# EUROPEAN PATENT APPLICATION

(11) **EP 4 286 342 A1**
(43) Date of publication of application: **06.12.2023**
(21) Application number: 23151269.0
(22) Date of filing: 12.01.2023
(51) Int. Cl.: C01G 53/00

(54) **POSITIVE ACTIVE MATERIAL FOR RECHARGEABLE LITHIUM BATTERY, POSITIVE ELECTRODE FOR RECHARGEABLE LITHIUM BATTERY, AND RECHARGEABLE LITHIUM BATTERY**

(30) Priority: 30.05.2022 KR 20220066266
(71) Applicant: Samsung SDI Co., Ltd., Yongin-si, Gyeonggi-do 17084 (KR)
(72) Inventor: KONG, Youngsun, 17084 Yongin-si (KR); SEONG, Wonmo, 17084 Yongin-si (KR); KANG, Seok Mun, 17084 Yongin-si (KR); HASE, Naoyuki, 17084 Yongin-si (KR); YOON, Jaesang, 17084 Yongin-si (KR); JUN, Do-Wook, 17084 Yongin-si (KR)
(74) Representative: Marks & Clerk LLP

(57) **Abstract**

Disclosed are a positive active material for a rechargeable lithium battery, and a positive electrode for a rechargeable lithium battery and a rechargeable lithium battery including the same, the positive active material including a first positive active material including a layered cobalt-free lithium nickel-based composite oxide, being in a form of secondary particles in which a plurality of primary particles are aggregated, and having an average particle diameter (D50) of about 8 µm to about 20 µm; and a second positive active material including a layered cobalt-free lithium nickel-based composite oxide, being in a form of single particles, and having an average particle diameter (D50) of about 1 µm to about 7 µm, wherein a molar content of nickel based on the total elements excluding lithium and oxygen in the second positive active material is about 1 mol% to about 10 mol% more than a molar content of nickel based on the total elements excluding lithium and oxygen in the first positive active material.

## Description

### BACKGROUND OF THE INVENTION

### (a) Field of the Invention

A positive active material for a rechargeable lithium battery, a positive electrode for a rechargeable lithium battery including the same, and a rechargeable lithium battery are disclosed.

### (b) Description of the Related Art

A portable information device such as a cell phone, a laptop, smart phone, and the like or an electric vehicle has used a rechargeable lithium battery having high energy density and easy portability as a driving power source. Recently, research has been actively conducted to use a rechargeable lithium battery with high energy density as a driving power source or power storage power source for hybrid or electric vehicles.

In order to meet these uses, positive active materials capable of realizing high-capacity, high stability, and long cycle-life performance are being studied, and in general, ternary-based positive active materials of Ni, Co, and Mn or Ni, Co, and Al are used. However, as a demand for large or high-capacity rechargeable lithium batteries is rapidly increasing in recent years, positive active materials containing cobalt, a rare metal, are expected to be short of supply. In other words, since the cobalt is expensive, and not many reserves thereof remain, in order to manufacture large or high-capacity batteries and the like, development of a cobalt-free positive active material is required. Since the cobalt plays a key role in forming a positive active material structure, when the cobalt is removed, the positive active material may have structural defects, which cause problems of increasing resistance, hardly securing a long cycle-life, and deteriorating performance such as capacity, efficiency, and the like.

Conventionally known cobalt-free positive active materials have an olivine-based crystal structure such as lithium iron phosphate (LFP), lithium manganese phosphate (LMP), lithium manganese iron phosphate (LMFP), or a spinel crystal structure such as lithium manganese oxide (LMO), which are not a layered structure. These cobalt-free positive active materials have high structural stability but a structural limitation of low capacity due to low lithium availability. Cobalt-free positive active materials with a layered structure structurally have a relatively large lithium content and thus exhibit excellent capacity and efficiency characteristics and accordingly, may be suitable as a material for a high-capacity battery but are structurally unstable, hardly securing long cycle-life characteristics. Accordingly, development of a layered cobalt-free positive active material capable of realizing high capacity and securing improved structural stability to simultaneously improve capacity, efficiency, and cycle-life characteristics of a rechargeable lithium battery is required.

### SUMMARY OF THE INVENTION

As a layered cobalt-free positive active material, a positive active material which may secure capacity and efficiency characteristics, suppress structural deterioration due to charging and discharging at the same time to improve cycle-life characteristics, and a positive electrode and a rechargeable lithium battery are provided.

In an embodiment, a positive active material for a rechargeable lithium battery includes a first positive active material including a layered cobalt-free lithium nickel-based composite oxide, being in a form of secondary particles in which a plurality of primary particles are aggregated, and having an average particle diameter (D50) of about 8 µm to about 20 µm; and a second positive active material including a layered cobalt-free lithium nickel-based composite oxide, being in a form of single particles, and having an average particle diameter (D50) of about 1 µm to about 7 µm, wherein a molar content of nickel based on the total elements excluding lithium and oxygen in the second positive active material is about 1 mol% to about 10 mol% more than a molar content of nickel based on the total elements excluding lithium and oxygen in the first positive active material.

In another embodiment, a positive electrode for a rechargeable lithium battery includes a current collector and a positive active material layer on the current collector, wherein the positive active material layer includes the aforementioned positive active material.

In another embodiment, a rechargeable lithium battery includes a positive electrode including the positive active material, a negative electrode, and an electrolyte.

At least some of the above and other features of the invention are set out in the claims.

The positive active material for a rechargeable lithium battery according to an embodiment as a layered cobalt-free positive active material may simultaneously secure capacity, efficiency, and cycle-life characteristics of a rechargeable lithium battery.

### BRIEF DESCRIPTION OF THE DRAWINGS

FIG. 1 is a schematic view illustrating a rechargeable lithium battery according to an embodiment.
FIGS. 2 and 3 are scanning electron micrographs of the positive active material of Example 1.
FIGS. 4 and 5 are scanning electron micrographs of the positive active material of Comparative Example 1.
FIG. 6 is a graph showing high-temperature cycle-life characteristics of battery cells manufactured in Example 1 and Comparative Examples 1 to 3.

### DETAILED DESCRIPTION OF THE EMBODIMENTS

Hereinafter, specific embodiments will be described in detail so that those of ordinary skill in the art can easily implement them. However, this disclosure may be embodied in many different forms and is not construed as limited to the example embodiments set forth herein.

The terminology used herein is used to describe embodiments only, and is not intended to limit the present invention. The singular expression includes the plural expression unless the context clearly dictates otherwise.

As used herein, "combination thereof" means a mixture, laminate, composite, copolymer, alloy, blend, reaction product, and the like of the constituents.

Herein, it should be understood that terms such as "comprises," "includes," or "have" are intended to designate the presence of an embodied feature, number, step, element, or a combination thereof, but it does not preclude the possibility of the presence or addition of one or more other features, numbers, steps, elements, or a combination thereof.

In the drawings, the thickness of layers, films, panels, regions, etc., are exaggerated for clarity and like reference numerals designate like elements throughout the specification. It will be understood that when an element such as a layer, film, region, or substrate is referred to as being "on" another element, it can be directly on the other element or intervening elements may also be present. In contrast, when an element is referred to as being "directly on" another element, there are no intervening elements present.

In addition, "layer" herein includes not only a shape formed on the whole surface when viewed from a plan view, but also a shape formed on a partial surface.

In addition, the average particle diameter may be measured by a method well known to those skilled in the art, for example, may be measured by a particle size analyzer, or may be measured by an optical microscope photograph such as a transmission electron micrograph or a scanning electron micrograph. Alternatively, it is possible to obtain an average particle diameter value by measuring using a dynamic light scattering method, performing data analysis, counting the number of particles for each particle size range, and calculating from this. Unless otherwise defined, the average particle diameter may mean the diameter (D50) of particles having a cumulative volume of 50 volume% in the particle size distribution, as measured by SEM images.

Herein, "or" is not to be construed as an exclusive meaning, for example, "A or B" but is to be construed to include A, B, A+B, and the like.

### Positive Active Material

In an embodiment, a positive active material for a rechargeable lithium battery includes a first positive active material including a layered cobalt-free lithium nickel-based composite oxide, being in a form of secondary particles in which a plurality of primary particles are aggregated, and having an average particle diameter (D50) of about 8 µm to about 20 µm; and a second positive active material including a layered cobalt-free lithium nickel-based composite oxide, being in a form of single particles, and having an average particle diameter (D50) of about 1 µm to about 7 µm, wherein a molar content of nickel based on the total elements excluding lithium and oxygen in the second positive active material is about 1 mol% to about 10 mol% more than a molar content of nickel based on the total elements excluding lithium and oxygen in the first positive active material.

In general, cobalt is used in order to stably maintain a layered structure of a positive active material, but an embodiment provides a method of maintaining and stabilizing the layered structure without using the cobalt.

As described above, according to an increasing demand for high-capacity rechargeable lithium batteries but depletion of cobalt, which is a rare metal, development of a cobalt-free positive active material and in particular, a layered cobalt-free positive active material capable of realizing high capacity is required. In general, the layered cobalt-free positive active material has a problem of structural deterioration according to charges and discharges, but an embodiment is to physically maintain the layered structure by introducing a single particle form thereinto. However, the single particle form, in order to compensate for a problem of a low lithium diffusion rate, is introduced into small particles having an average particle diameter of about 1 µm to about 7 µm and, for example, about 2 µm to about 5 µm, that is, the second positive active material. Accordingly, long-term cycle-life characteristics may be secured by balancing lithium migration rates of the first and second positive active materials and equally dividing a degree of deterioration of the cobalt-free positive active material into a polycrystal structure and a single crystal structure.

However, a positive active material in the form of single particles has a short lithium migration path, excellent crystal structure orientation, and high structural stability and thus excellent cycle-life characteristics, but since the lithium migration path is limited, and a specific surface area is small, capacity and efficiency thereof with the same composition are inferior.

In an embodiment, in order to solve this trade-off characteristic, the second positive active material, which is small particles in the form of single particles, is designed to have a higher nickel concentration of about 1 mol% to about 10 mol% than the first positive active material, which is large particles, balancing deterioration characteristics of the small particles into those of the large particles to secure long cycle-life characteristics without deteriorating capacity and efficiency.

For example, when the nickel concentration of the first positive active material has a difference of less than about 1 mol% from that of the second positive active material, for example, when the nickel concentration of the nickel concentrations is the same as or higher than that of the second positive active material, the second positive active material may have a problem of deteriorated lithium availability and thereby, deteriorated capacity, resulting in an imbalance in capacity and deterioration rates between the large and small particles and thus just slightly improving cycle-life characteristics.

In other words, in the battery field, since capacity, efficiency, and cycle-life characteristics are in a trade-off relationship with one another, it is common to lose one to obtain other characteristics, but an embodiment provides a method of simultaneously securing the capacity, efficiency, and cycle-life characteristics without the trade-off.

The positive active material for a rechargeable lithium battery may be a layered cobalt-free positive active material, a cobalt-free nickel-based positive active material, or a cobalt-free nickel-manganese-based positive active material. The cobalt-free may mean that there is no cobalt, cobalt is not used, or only a very small amount of cobalt is used. In addition, the aforementioned single particle form means that particles are not structurally aggregated with one another but independently present in a morphology phase and exist alone without a grain boundary within a particle and are respectively composed of a single particle. The aforementioned single particle may be expressed as a monolithic structure, a non-aggregated particle, a monolith structure, and the like and may be monocrystalline.

In an embodiment, the first positive active material in the form of secondary particles has an average particle diameter of about 8 µm to about 20 µm, and the second positive active material in the form of single particles has an average particle diameter of about 1 µm to about 7 µm. Herein, the average particle diameter means a diameter of particles at a cumulative volume of about 50 volume%, that is, D50 in a particle distribution. The average particle diameter may be measured through an optical microscope photograph taken by using a scanning electron microscope, a transmission electron microscope, and the like. For example, about 30 particles in the form of secondary particles are randomly selected from the scanning electron microscope photograph of the positive active material and then, measured with respect to sizes (particle diameters or lengths of long axis) to obtain a particle distribution, wherein D50 is taken as an average particle diameter of the first positive active material. In addition, about 30 particles are randomly selected from single particles shown in the scanning electron microscope of the positive active material and then, measured with respect to (particle diameter or length of long axis) to obtain a particle distribution, wherein D50 is calculated as an average particle diameter of the second positive active material.

The average particle diameter of the first positive active material may be, for example, about 9 µm to about 19 µm, about 10 µm to about 18 µm, or about 11 µm to about 17 µm. The average particle diameter of the second positive active material may be, for example, about 1 µm to about 6 µm, about 1 µm to about 5 µm, or about 2 µm to about 4 µm. When each average particle diameter satisfies the ranges, a rechargeable lithium battery cell including the same may realize high density and high energy density, simultaneously improving capacity, efficiency, and cycle-life characteristics of a rechargeable lithium battery.

In addition, a method of measuring a molar content of nickel may be performed by quantitively analyzing a content of nickel based on the total content of elements excluding lithium and oxygen through energy dispersive X-ray spectroscopy (EDS) in the scanning electron microscope photograph of the positive active material to obtain the content of nickel in an atom% unit and converting the atom% unit into mol% unit. Herein, in the scanning electron microscope photograph of the positive active material, about 30 particles in the form of secondary particles from the first positive active material are taken to calculate each nickel content thereof and then, calculating an arithmetic average thereof as "the molar content of nickel based on the total content of elements excluding lithium and oxygen in the first positive active material," and in addition, about 30 particles in the form of single particles in the scanning electron microscope photograph of the second positive active material are taken to calculate each nickel content thereof and calculate an arithmetic average thereof as "the molar content of nickel based on the total content of elements excluding lithium and oxygen in the second positive active material."

The method of measuring the nickel content may use Inductively Coupled Plasma-Mass Spectrometry (ICP-MS), Inductively Coupled Plasma Optical Emission Spectroscopy (ICP-OES), and the like in addition to SEM-EDS.

In an embodiment, a difference of "the molar content of nickel based on the total content of elements excluding lithium and oxygen in the first positive active material" subtracted from "the molar content of nickel based on the total content of elements excluding lithium and oxygen in the second positive active material" satisfies about 1 mol% to about 10 mol%. A difference of the nickel concentration of the first positive active material subtracted from that of the second positive active material may be, for example, about 2 mol% to about 10 mol%, about 3 mol% to about 10 mol%, about 4 mol% to about 9 mol%, or about 1 mol% to about 8 mol%. The layered cobalt-free positive active material designed in this way is used to simultaneously improve capacity, efficiency, and cycle-life of a rechargeable lithium battery.

The layered cobalt-free lithium nickel-based composite oxide of the first positive active material may be, for example, represented by Chemical Formula 1.

[Chemical Formula 1] Liₓ₁Niₐ₁Mn_{b1}M¹_{(1-a1-b1)}O₂

In Chemical Formula 1, M¹ is at least one element selected from Al, B, Ba, Ca, Ce, Cr, Cu, F, Fe, Mg, Mo, Nb, P, S, Si, Sr, Ti, V, W, and Zr, 0.9≤x1≤1.2, 0.6≤a1≤1, and 0≤b1≤0.4.

In Chemical Formula 1, for example, 0.6≤a1≤0.99 and 0.01≤b1≤0.4, 0.6≤a1≤0.90 and 0.10≤b1≤0.4, 0.6≤a1≤0.85 and 0.15≤b1≤0.4, 0.6≤a1≤0.80 and 0.20≤b1≤0.4, or 0.7≤a1≤0.90 and 0.10≤b1≤0.3.

The layered cobalt-free lithium nickel-based composite oxide of the second positive active material may be, for example, represented by Chemical Formula 2.

Liₓ₂Niₐ₂Mn_{b2}M²_{(1-a2-b2)}O₂

In Chemical Formula 2, M² is at least one element selected from Al, B, Ba, Ca, Ce, Cr, Cu, F, Fe, Mg, Mo, Nb, P, S, Si, Sr, Ti, V, W, and Zr, 0.9≤x2≤1.2, 0.6≤a2≤1, and 0≤b2≤0.4.

In Chemical Formula 2, for example, 0.6≤a2≤0.99 and 0.01≤b2≤0.4, 0.6≤a2≤0.90 and 0.10≤b2≤0.4, 0.6≤a2≤0.85 and 0.15≤b2≤0.4, 0.6≤a2≤0.80 and 0.20≤b2≤0.4, or 0.7≤a2≤0.90 and 0.10≤b2≤0.3.

According to an embodiment, since the molar content of nickel based on the total elements excluding lithium and oxygen in the second positive active material may be about 1 mol% to about 10 mol% more than the molar content of nickel based on the total elements excluding lithium and oxygen in the first positive active material, in the relationship between Chemical Formula 1 and Chemical Formula 2, 0.02≤(a2-a1)≤0.10 may be established, for example, 0.04≤(a2-a1)≤0.10, 0.05≤(a2-a1)≤0.10, or 0.02≤(a2-a1)≤0.80 may be satisfied. In this case, it is possible to simultaneously improve capacity, efficiency, and cycle-life characteristics even while applying a layered cobalt-free positive active material.

The first positive active material in the form of secondary particles may have, for example, a spherical shape or a shape close to a spherical shape. In addition, the second positive active material in the form of a single particle may have, for example, a polyhedral shape a spherical shape, or may be shapeless.

The positive active material for the rechargeable lithium battery may include about 65 wt% to about 95 wt% of the first positive active material and about 5 wt% to about 35 wt% of the second positive active material. For example, the positive active material for the rechargeable lithium battery may include about 65 wt% to about 90 wt% of the first positive active material and about 10 wt% to about 35 wt% of the second positive active material; about 70 wt% to about 90 wt% of the first positive active material and about 10 wt% to about 30 wt% of the second positive active material; or about 70 wt% to about 80 wt% of the first positive active material and about 20 wt% to about 30 wt% of the second positive active material. When the above mixing ratio is satisfied, capacity, efficiency, and cycle-life characteristics of the rechargeable lithium battery may be simultaneously improved even while applying the layered cobalt-free positive active material. For example, when an amount of the second positive active material exceeds 35 wt%, a balance in the lithium solubility with the first positive active material is broken, so that a trade-off characteristic in which cycle-life characteristics are improved but the capacity and efficiency are deteriorated may appear.

### Positive Electrode

In an embodiment, a positive electrode including the aforementioned positive active material for the rechargeable lithium battery is provided. The positive electrode for a rechargeable lithium battery includes a current collector and a positive active material layer on the current collector, and the positive active material layer includes the aforementioned positive active material, and may further include a binder and/or a conductive material.

The binder improves binding properties of positive active material particles with one another and with a current collector. Examples thereof may be polyvinyl alcohol, carboxylmethyl cellulose, hydroxypropyl cellulose, diacetyl cellulose, polyvinylchloride, carboxylated polyvinylchloride, polyvinylfluoride, an ethylene oxide-containing polymer, polyvinylpyrrolidone, polyurethane, polytetrafluoroethylene, polyvinylidene fluoride, polyethylene, polypropylene, a styrene-butadiene rubber, an acrylated styrene-butadiene rubber, an epoxy resin, nylon, and the like, but are not limited thereto.

A content of the binder in the positive active material layer may be about 1 wt% to about 5 wt% based on the total weight of the positive active material layer.

The conductive material is included to provide electrode conductivity. Any electrically conductive material may be used as a conductive material unless it causes a chemical change. Examples of the conductive material may include a carbon-based material such as natural graphite, artificial graphite, carbon black, acetylene black, ketjen black, a carbon fiber, a carbon nanofiber, carbon nanotube, and the like; a metal-based material of a metal powder or a metal fiber including copper, nickel, aluminium, silver, and the like; a conductive polymer such as a polyphenylene derivative; or a mixture thereof.

In the positive active material layer, a content of the conductive material may be about 1 wt% to about 5 wt% based on the total weight of the positive active material layer.

An aluminium foil may be used as the positive current collector, but the present disclosure is not limited thereto.

### Rechargeable Lithium Battery

In an embodiment, a rechargeable lithium battery includes a positive electrode including the aforementioned positive active material, a negative electrode, a separator between the positive electrode and the positive electrode, and an electrolyte.

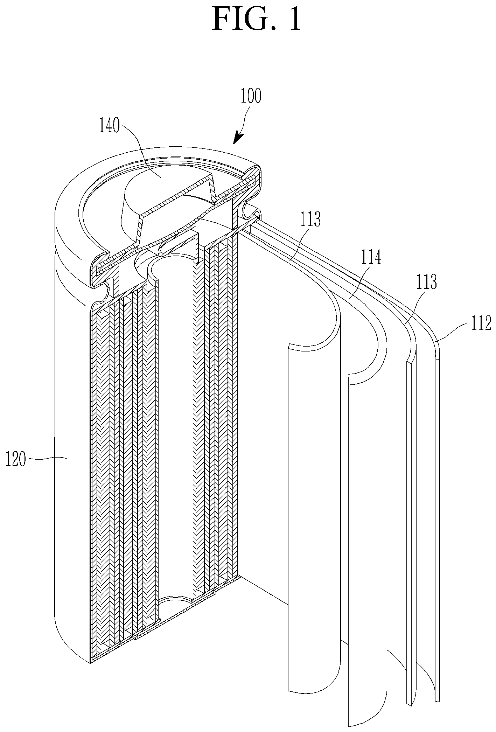

FIG. 1 is a schematic view illustrating a rechargeable lithium battery according to an embodiment. Referring to FIG. 1, a rechargeable lithium battery 100 according to an embodiment includes a battery cell including a positive electrode 114, a negative electrode 112 facing the positive electrode 114, a separator 113 between the positive electrode 114 and the negative electrode 112, and an electrolyte for a rechargeable lithium battery impregnating the positive electrode 114, the negative electrode 112, and the separator 113, a battery case 120 housing the battery cell, and a sealing member 140 sealing the battery case 120.

The negative electrode for a rechargeable lithium battery includes a current collector and a negative active material layer on the current collector. The negative active material layer may include a negative active material, and may further include a binder and/or a conductive material.

The negative active material may include a material that reversibly intercalates/deintercalates lithium ions, a lithium metal, a lithium metal alloy, a material capable of doping/dedoping lithium, or transition metal oxide.

The material that reversibly intercalates/deintercalates lithium ions may include, for example, crystalline carbon, amorphous carbon, or a combination thereof as a carbon-based negative active material. The crystalline carbon may be non-shaped, or sheet, flake, spherical, or fiber shaped natural graphite or artificial graphite. The amorphous carbon may be a soft carbon, a hard carbon, a mesophase pitch carbonization product, calcined coke, and the like.

The lithium metal alloy includes an alloy of lithium and a metal selected from Na, K, Rb, Cs, Fr, Be, Mg, Ca, Sr, Si, Sb, Pb, In, Zn, Ba, Ra, Ge, Al, and Sn.

The material capable of doping/dedoping lithium may be a Si-based negative active material or a Sn-based negative active material. The Si-based negative active material may include silicon, a silicon-carbon composite, SiOₓ (0 < x < 2), a Si-Q alloy (wherein Q is an alkali metal, an alkaline-earth metal, a Group 13 element, a Group 14 element, a Group 15 element, a Group 16 element, a transition metal, a rare earth element, and a combination thereof, but not Si) and the Sn-based negative active material may include Sn, SnO₂, Sn-R alloy (wherein R is an alkali metal, an alkaline-earth metal, a Group 13 element, a Group 14 element, a Group 15 element, a Group 16 element, a transition metal, a rare earth element, and a combination thereof, but not Sn). At least one of these materials may be mixed with SiO₂. The elements Q and R may be selected from Mg, Ca, Sr, Ba, Ra, Sc, Y, Ti, Zr, Hf, Rf, V, Nb, Ta, Db, Cr, Mo, W, Sg, Tc, Re, Bh, Fe, Pb, Ru, Os, Hs, Rh, Ir, Pd, Pt, Cu, Ag, Au, Zn, Cd, B, Al, Ga, Sn, In, Tl, Ge, P, As, Sb, Bi, S, Se, Te, Po, and a combination thereof.

The silicon-carbon composite may be, for example, a silicon-carbon composite including a core including crystalline carbon and silicon particles and an amorphous carbon coating layer disposed on the surface of the core. The crystalline carbon may be artificial graphite, natural graphite, or a combination thereof. The amorphous carbon precursor may be a coal-based pitch, mesophase pitch, petroleum-based pitch, coal-based oil, petroleum-based heavy oil, or a polymer resin such as a phenol resin, a furan resin, or a polyimide resin. In this case, a content of silicon may be about 10 wt% to about 50 wt% based on the total weight of the silicon-carbon composite. In addition, the content of the crystalline carbon may be about 10 wt% to about 70 wt% based on the total weight of the silicon-carbon composite, and the content of the amorphous carbon may be about 20 wt% to about 40 wt% based on the total weight of the silicon-carbon composite. In addition, a thickness of the amorphous carbon coating layer may be about 5 nm to about 100 nm. An average particle diameter (D50) of the silicon particles may be about 10 nm to about 20 µm. The average particle diameter (D50) of the silicon particles may be preferably about 10 nm to about 200 nm. The silicon particles may exist in an oxidized form, and in this case, an atomic content ratio of Si:O in the silicon particles indicating a degree of oxidation may be a weight ratio of about 99:1 to about 33:67. The silicon particles may be SiOₓ particles, and in this case, the range of x in SiOₓ may be greater than about 0 and less than about 2. In the present specification, unless otherwise defined, an average particle diameter (D50) indicates a particle where an accumulated volume is about 50 volume% in a particle distribution.

The Si-based negative active material or Sn-based negative active material may be mixed with the carbon-based negative active material. When the Si-based negative active material or Sn-based negative active material and the carbon-based negative active material are mixed and used, the mixing ratio may be a weight ratio of about 1:99 to about 90:10.

In the negative active material layer, the negative active material may be included in an amount of about 95 wt% to about 99 wt% based on the total weight of the negative active material layer.

In an embodiment, the negative active material layer further includes a binder, and may optionally further include a conductive material. A content of the binder in the negative active material layer may be about 1 wt% to about 5 wt% based on the total weight of the negative active material layer. In addition, when the conductive material is further included, the negative active material layer may include about 90 wt% to about 98 wt% of the negative active material, about 1 wt% to about 5 wt% of the binder, and about 1 wt% to about 5 wt% of the conductive material.

The binder serves to well adhere the negative active material particles to each other and also to adhere the negative active material to the current collector. The binder may be a water-insoluble binder, a water-soluble binder, or a combination thereof.

Examples of the water-insoluble binder include polyvinyl chloride, carboxylated polyvinyl chloride, polyvinyl fluoride, an ethylene oxide-containing polymer, an ethylene propylene copolymer, polystyrene, polyvinylpyrrolidone, polyurethane, polytetrafluoroethylene, polyvinylidene fluoride, polyethylene, polypropylene, polyamideimide, polyimide, or a combination thereof.

The water-soluble binder may include a rubber binder or a polymer resin binder. The rubber binder may be selected from a styrene-butadiene rubber, an acrylated styrene-butadiene rubber, an acrylonitrile-butadiene rubber, an acrylic rubber, a butyl rubber, a fluororubber, and a combination thereof. The polymer resin binder may be selected from polyethylene oxide, polyvinylpyrrolidone, polyepichlorohydrin, polyphosphazene, polyacrylonitrile, an ethylene propylene diene copolymer, polyvinylpyridine, chlorosulfonated polyethylene, latex, a polyester resin, an acrylic resin, a phenol resin, an epoxy resin, polyvinyl alcohol, and a combination thereof.

When a water-soluble binder is used as the negative electrode binder, it may further include a cellulose-based compound capable of imparting viscosity as a type of thickener. As the cellulose-based compound, one or more of carboxymethyl cellulose, hydroxypropylmethyl cellulose, methyl cellulose, or alkali metal salts thereof may be mixed and used. As the alkali metal, Na, K, or Li may be used. An amount of the thickener used may be about 0.1 parts by weight to about 3 parts by weight based on 100 parts by weight of the negative active material.

The conductive material is included to provide electrode conductivity. Any electrically conductive material may be used as a conductive material unless it causes a chemical change. Examples of the conductive material include a carbon-based material such as natural graphite, artificial graphite, carbon black, acetylene black, ketjen black, a carbon fiber, a carbon nanofiber, carbon nanotube, and the like; a metal-based material of a metal powder or a metal fiber including copper, nickel, aluminium, silver, and the like; a conductive polymer such as a polyphenylene derivative; or a mixture thereof.

The negative current collector may include one selected from a copper foil, a nickel foil, a stainless steel foil, a titanium foil, a nickel foam, a copper foam, a polymer substrate coated with a conductive metal, and a combination thereof.

The electrolyte includes a non-aqueous organic solvent and a lithium salt.

The non-aqueous organic solvent serves as a medium for transmitting ions taking part in the electrochemical reaction of a battery. The non-aqueous organic solvent may be a carbonate-based, ester-based, ether-based, ketone-based, or alcohol-based solvent, or aprotic solvent. Examples of the carbonate-based solvent include dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), butylene carbonate (BC), and the like. Examples of the ester-based solvent include methyl acetate, ethyl acetate, n-propyl acetate, dimethyl acetate, methyl propionate, ethyl propionate, γ-butyrolactone, decanolide, valerolactone, mevalonolactone, caprolactone, and the like. The ether-based solvent may be dibutyl ether, tetraglyme, diglyme, dimethoxyethane, 2-methyltetrahydrofuran, tetrahydrofuran, and the like and the ketone-based solvent may be cyclohexanone, and the like. In addition, the alcohol-based solvent may be ethyl alcohol, isopropyl alcohol, etc. and the aprotic solvent may be nitriles such as R-CN (where R is a C2 to C20 linear, branched, or cyclic hydrocarbon group and may include a double bond, an aromatic ring, or an ether bond), amides such as dimethylformamide, dioxolanes such as 1,3-dioxolane, sulfolanes, and the like.

The non-aqueous organic solvent may be used alone or in a mixture. When the non-aqueous organic solvent is used in a mixture, the mixture ratio may be controlled in accordance with a desirable battery performance.

In addition, in the case of the carbonate-based solvent, a mixture of a cyclic carbonate and a chain carbonate may be used. In this case, when the cyclic carbonate and the chain carbonate are mixed in a volume ratio of about 1:1 to about 1:9, the electrolyte may exhibit excellent performance.

The non-aqueous organic solvent may further include an aromatic hydrocarbon-based organic solvent in addition to the carbonate-based solvent. In this case, the carbonate-based solvent and the aromatic hydrocarbon-based organic solvent may be mixed in a volume ratio of about 1:1 to about 30:1.

As the aromatic hydrocarbon-based solvent, an aromatic hydrocarbon-based compound represented by Chemical Formula I may be used.

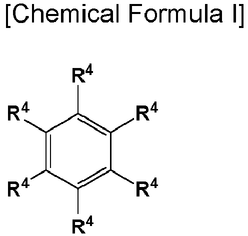

In Chemical Formula I, R⁴ to R⁹ are the same or different and are selected from hydrogen, a halogen, a C1 to C10 alkyl group, a C1 to C10 haloalkyl group, and a combination thereof.

Specific examples of the aromatic hydrocarbon-based solvent may be selected from benzene, fluorobenzene, 1,2-difluorobenzene, 1,3-difluorobenzene, 1,4-difluorobenzene, 1,2,3-trifluorobenzene, 1,2,4-trifluorobenzene, chlorobenzene, 1,2-dichlorobenzene, 1,3-dichlorobenzene, 1,4-dichlorobenzene, 1,2,3-trichlorobenzene, 1,2,4-trichlorobenzene, iodobenzene, 1,2-diiodobenzene, 1,3-diiodobenzene, 1,4-diiodobenzene, 1,2,3-triiodobenzene, 1,2,4-triiodobenzene, toluene, fluorotoluene, 2,3-difluorotoluene, 2,4-difluorotoluene, 2,5-difluorotoluene, 2,3,4-trifluorotoluene, 2,3,5-trifluorotoluene, chlorotoluene, 2,3-dichlorotoluene, 2,4-dichlorotoluene, 2,5-dichlorotoluene, 2,3,4-trichlorotoluene, 2,3,5-trichlorotoluene, iodotoluene, 2,3-diiodotoluene, 2,4-diiodotoluene, 2,5-diiodotoluene, 2,3,4-triiodotoluene, 2,3,5-triiodotoluene, xylene, and a combination thereof.

The electrolyte may further include vinylene carbonate or an ethylene carbonate-based compound of Chemical Formula II in order to improve cycle-life of a battery.

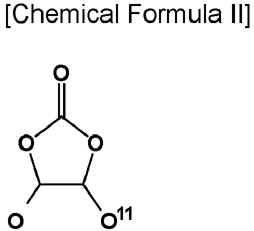

In Chemical Formula II, R¹⁰ and R¹¹ are the same or different, and are selected from hydrogen, a halogen, a cyano group, a nitro group, and fluorinated C1 to C5 alkyl group, provided that at least one of R¹⁰ and R¹¹ is selected from a halogen, a cyano group, a nitro group, and fluorinated C1 to C5 alkyl group, but both of R¹⁰ and R¹¹ are not hydrogen.

Examples of the ethylene carbonate-based compound may be difluoroethylene carbonate, chloroethylene carbonate, dichloroethylene carbonate, bromoethylene carbonate, dibromoethylene carbonate, nitroethylene carbonate, cyanoethylene carbonate, or fluoroethylene carbonate. An amount of the additive for improving cycle-life may be used within an appropriate range.

The lithium salt dissolved in the non-aqueous organic solvent supplies lithium ions in a battery, enables a basic operation of a rechargeable lithium battery, and improves transportation of the lithium ions between positive and negative electrodes.

Examples of the lithium salt include at least one supporting salt selected from LiPF₆, LiBF₄, LiSbF₆, LiAsF₆, LiN(SO₂C₂F₅)₂, Li(CF₃SO₂)₂N, LiN(SO₃C₂F₅)₂, Li(FSO₂)₂N (lithium bis(fluorosulfonyl)imide, LiFSI), LiC₄F₉SO₃, LiClO₄, LiAlO₂, LiAlCl₄, LiPO₂F₂, LiN(CₓF₂ₓ₊₁SO₂)(C_{y}F_{2y+1}SO₂), wherein x and y are natural numbers, for example, an integer ranging from 1 to 20, lithium difluoro(bisoxalato) phosphate, LiCl, Lil, LiB(C₂O₄)₂ (lithium bis(oxalato) borate, LiBOB), and lithium difluoro(oxalato)borate (LiDFOB).

The lithium salt may be used in a concentration ranging from about 0.1 M to about 2.0 M. When the lithium salt is included at the above concentration range, an electrolyte may have excellent performance and lithium ion mobility due to optimal electrolyte conductivity and viscosity.

The separator 113 separates a positive electrode 114 and a negative electrode 112 and provides a transporting passage for lithium ions and may be any generally-used separator in a lithium ion battery. In other words, it may have low resistance to ion transport and excellent impregnation for an electrolyte. For example, the separator may be selected from a glass fiber, polyester, polyethylene, polypropylene, polytetrafluoroethylene, or a combination thereof. It may have a form of a non-woven fabric or a woven fabric. For example, in a lithium ion battery, a polyolefin-based polymer separator such as polyethylene and polypropylene is mainly used. In order to ensure the heat resistance or mechanical strength, a coated separator including a ceramic component or a polymer material may be used. Optionally, it may have a mono-layered or multilayered structure.

Rechargeable lithium batteries may be classified as lithium ion batteries, lithium ion polymer batteries, and lithium polymer batteries according to the presence of a separator and the type of electrolyte used therein. The rechargeable lithium batteries may have a variety of shapes and sizes, and include cylindrical, prismatic, coin, or pouch-type batteries, and may be thin film batteries or may be rather bulky in size. Structures and manufacturing methods for lithium ion batteries pertaining to this disclosure are well known in the art.

The rechargeable lithium battery according to an embodiment may be used in an electric vehicle (EV), a hybrid electric vehicle such as a plug-in hybrid electric vehicle (PHEV), and a portable electronic device because it implements a high capacity and has excellent storage stability, cycle-life characteristics, and high rate characteristics at high temperatures.

Hereinafter, examples of the present invention and comparative examples are described. It is to be understood, however, that the examples are for the purpose of illustration and are not to be construed as limiting the present invention.

### Example 1

### (1) Preparation of Positive Active Material

80 wt% of a first positive active material in the form of secondary particles into which a plurality of primary particles are aggregated and having a composition of LiNi_{0.75}Mn_{0.22}Al_{0.03}O₂ and 20 wt% of a second positive active material in the form of single particles and having a composition of LiNi_{0.80}Mn_{0.20}O₂ were mixed, preparing a positive active material.

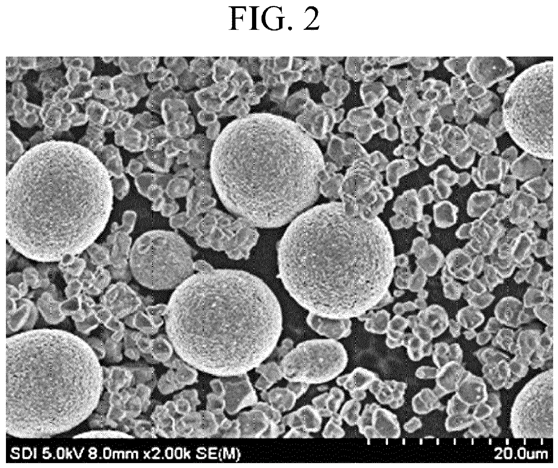

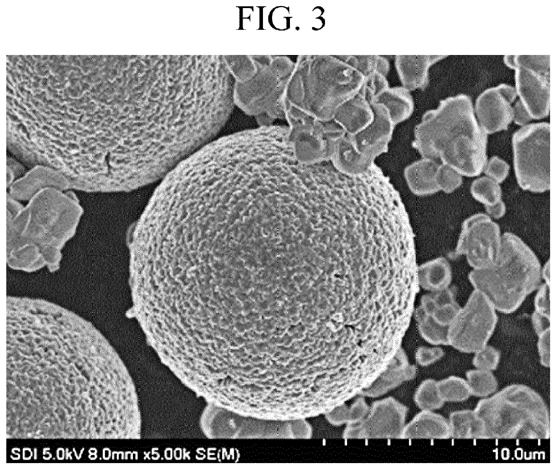

FIGS. 2 and 3 show scanning electron microscope photographs of the positive active material of Example 1. Referring to FIGS. 2 and 3, the first positive active material in the form of secondary particles turns out to be mixed with the second positive active material in the form of single particles. The first positive active material has an average particle diameter (D50) of about 12 µm, and the second positive active material has an average particle diameter (D50) of about 2.5 µm or so. In the composition of Example 1, a nickel concentration (80 mol%) of the second positive active material is designed to be higher by about 5 mol% than a nickel concentration (75 mol%) of the first positive active material.

### (2) Manufacture of Positive Electrode

95 wt% of the prepared positive active material, 3 wt% of a polyvinylidene fluoride binder, and 2 wt% of a carbon nanotube conductive material are mixed in an N-methylpyrrolidone solvent, preparing positive active material slurry. The positive active material slurry is coated on an aluminium current collector and then, dried and compressed, manufacturing a positive electrode.

### (3) Manufacture of Rechargeable Lithium Battery Cell

The positive electrode and a lithium metal counter electrode are used, a separator with a polyethylene polypropylene multi-layer structure is interposed therebetween, and then, an electrolyte solution prepared by adding 1.0 M LiPF₆ lithium salt in a mixed solvent of ethylene carbonate and diethyl carbonate in a volume ratio of 50:50 in a volume ratio is injected thereinto, manufacturing a coin half-cell.

### Example 2

The same first positive active material as used in Example 1 was used, but a second positive active material having a composition of LiNi_{0.80}Mn_{0.20}O₂ and an average particle diameter (D50) of about 4 µm in the form of single particles was used.
This positive active material was used in the same manner as in Example 1, manufacturing a positive electrode and a rechargeable lithium battery cell.

### Comparative Example 1

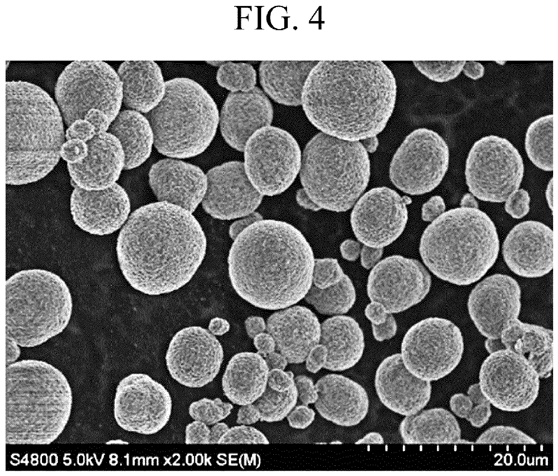

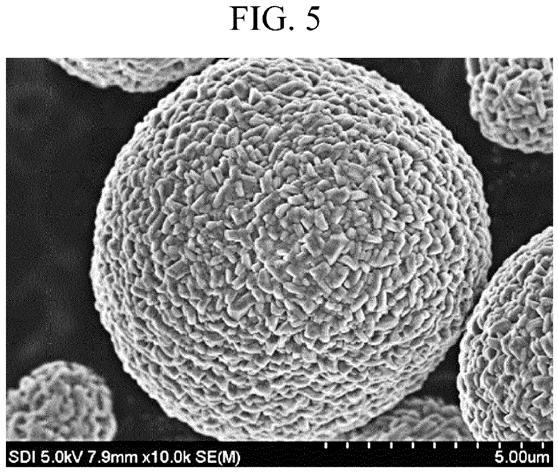

The same first positive active material as used in Example 1 was used, but a second positive active material having a composition of LiNi_{0.80}Mn_{0.20}O₂ composition in the form of secondary particles was used. FIGS. 4 and 5 are scanning electron microscope photographs showing the positive active material of Comparative Example 1. Referring to FIGS. 4 and 5, the first positive active material (large particles) in the form of secondary particles and the second positive active material (small particles) in the form of secondary particles are mixed. In Comparative Example 1, the first positive active material has an average particle diameter (D50) of about 12 µm, and the second positive active material has an average particle diameter (D50) of about 2.5 µm or so.

The positive active material was applied in the same manner as in Example 1, manufacturing a positive electrode and a rechargeable lithium battery cell.

### Comparative Example 2

The same first positive active material as used in Example 1 was used, but a second positive active material having a composition of LiNi_{0.75}Mn_{0.25}O₂ and an average particle diameter (D50) of about 4 µm in the form of single particles was used. In the composition of Comparative Example 2, the nickel concentration of the first positive active material and the nickel concentration of the second positive active material are at the same level.

This positive active material was applied in the same manner as in Example 1, manufacturing a positive electrode and a rechargeable lithium battery cell.

### Comparative Example 3

A first positive active material having a composition of LiNi_{0.80}Mn_{0.18}Al_{0.02}O₂ and an average particle diameter (D50) of about 12 µm was used, and a second positive active material having a composition of LiNi_{0.75}Mn_{0.25}O₂ and an average particle diameter (D50) of about 4 µm in the form of single particles was used. In the composition of Comparative Example 3, the nickel concentration of the second positive active material is designed to be about 5 mol% lower than that of the first positive active material. This positive active material was applied in the same manner as in Comparative Example 2, manufacturing a positive electrode and a rechargeable lithium battery cell.

### Evaluation Example: Charge/discharge Capacity and High-temperature Cycle-life Characteristics

Each coin half-cell according to Examples 1 and 2 and Comparative Examples 1 to 3 was charged at a constant current (0.2 C) and a constant voltage (4.25 V, 0.05 C cut-off), paused for 10 minutes, and discharged to 3.0 V at a constant current (0.2 C) to perform initial charge and discharge. The cells were measured with respect to initial charge capacity and initial discharge capacity, and the results are shown in Table 1, and a ratio of the initial discharge capacity to the initial charge capacity is calculated to obtain efficiency, and the results are shown in Table 1.

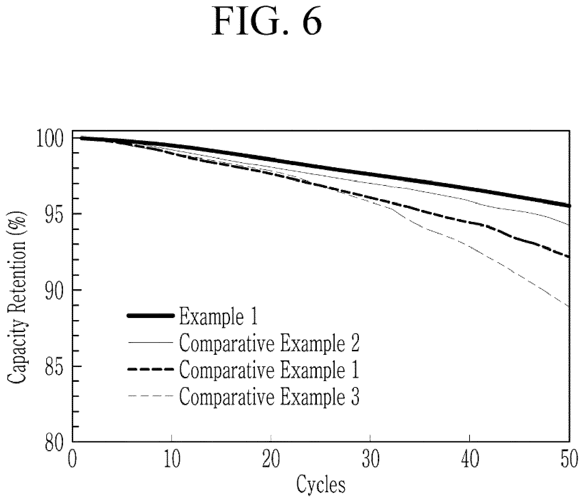

After the initial charge and discharge, 50 times' charges and discharges were repeated at a high temperature of 45 °C at 1 C. A ratio of capacity at each cycle to the initial discharge capacity for the 50 cycles was calculated to obtain capacity retention, which is shown in FIG. 6, and a ratio of 50^{th} discharge capacity to the initial discharge capacity was evaluated, and the results are shown in Table 1.

**(Table 1)**

| | Example 1 | Example 2 | Comparative Example 1 | Comparative Example 2 | Comparative Example 3 |
|---|---|---|---|---|---|
| Charge capacity (mAh/g) | 236.8 | 236.5 | 237.5 | 232.5 | 244.3 |
| Discharge capacity (mAh/g) | 204.1 | 203.4 | 204.2 | 196.5 | 205.2 |
| Efficiency (%) | 86.2 | 86.0 | 86.0 | 84.5 | 84.0 |
| High-temperature cycle-life (@50 cycles, %) | 95.2 | 95.4 | 89.0 | 92.2 | 91.0 |

Referring to Table 1 and FIG. 6, Comparative Example 1, in which the second positive active material is in the form of secondary particles, exhibits deteriorated high-temperature cycle-life characteristics, compared with Example 1. In addition, Comparative Example 2, in which the second positive active material is in the form of single particles and has the same nickel concentration level as that of the first positive active material, exhibits deteriorated initial discharge capacity and efficiency and just slightly improved cycle-life. Comparative Example 3, in which the second positive active material is in the form of single particles and has a lower nickel concentration than that of the first positive active material, exhibits deteriorated initial charge and discharge efficiency and also, deteriorated high-temperature cycle-life characteristics. On the contrary, Example 1 also exhibits high capacity and efficiency and simultaneously, excellent high-temperature cycle-life characteristics.

While this invention has been described in connection with what is presently considered to be practical example embodiments, it is to be understood that the invention is not limited to the disclosed embodiments. On the contrary, it is intended to cover various modifications and equivalent arrangements included within the scope of the appended claims.

**<Description of Symbols>**

| | |
|---|---|
| 100: rechargeable lithium battery | 112: negative electrode |
| 113: separator | 114: positive electrode |
| 120: battery case | 140: sealing member |

## Claims

1. A positive active material for a rechargeable lithium battery, comprising
a first positive active material comprising a layered cobalt-free lithium nickel-based composite oxide, being in a form of secondary particles in which a plurality of primary particles are aggregated, and having an average particle diameter (D50) of 8 µm to 20 µm, and
a second positive active material comprising a layered cobalt-free lithium nickel-based composite oxide, being in a form of single particles, and having an average particle diameter (D50) of 1 µm to 7 µm,
wherein a molar content of nickel based on the total elements excluding lithium and oxygen in the second positive active material is 1 mol% to 10 mol% more than a molar content of nickel based on the total elements excluding lithium and oxygen in the first positive active material.

2. The positive active material of claim 1, wherein
an average particle diameter (D50) of the second positive active material is 2 µm to 5 µm.

3. The positive active material of claim 1 or claim 2, wherein
the layered cobalt-free lithium nickel-based composite oxide of the first positive active material is represented by Chemical Formula 1, and
the layered cobalt-free lithium nickel-based composite oxide of the second positive active material is represented by Chemical Formula 2:
[Chemical Formula 1] Liₓ₁Niₐ₁Mn_{b1}M¹_{(1-a1-b1)}O₂
wherein, in Chemical Formula 1, M¹ is at least one element selected from Al, B, Ba, Ca, Ce, Cr, Cu, F, Fe, Mg, Mo, Nb, P, S, Si, Sr, Ti, V, W, and Zr, 0.9≤x1≤1.2, 0.6≤a1≤1, and 0≤b1≤0.4,
[Chemical Formula 2] Liₓ₂Niₐ₂Mn_{b2}M²_{(1-a2-b2})O₂
wherein, in Chemical Formula 2, M² is at least one element selected from Al, B, Ba, Ca, Ce, Cr, Cu, F, Fe, Mg, Mo, Nb, P, S, Si, Sr, Ti, V, W, and Zr, 0.9≤x2≤1.2, 0.6≤a2≤1, and 0≤b2≤0.4, and 0.02≤(a2-a1)≤0.10.

4. The positive active material of any one of claims 1 to 3, wherein
the molar content of nickel based on the total elements excluding lithium and oxygen in the second positive active material is 1 mol% to 8 mol% more than the molar content of nickel based on the total elements excluding lithium and oxygen in the first positive active material.

5. The positive active material of any one of claims 1 to 4, wherein
the first positive active material has a spherical shape, and
the second positive active material has a polyhedral shape, a spherical shape, or is irregular shape.

6. The positive active material of any one of claims 1 to 5, wherein
the positive active material for the rechargeable lithium battery comprises65 wt% to 95 wt% of the first positive active material and 5 wt% to 35 wt% of the second positive active material.

7. The positive active material of claim 6, wherein
the positive active material for the rechargeable lithium battery comprises 65 wt% to 90 wt% of the first positive active material and 10 wt% to 35 wt% of the second positive active material.

8. A positive electrode comprising
a current collector and a positive active material layer on the current collector,
wherein the positive active material layer comprises the positive active material of any one of claims 1 to 7.

9. A rechargeable lithium battery comprising the positive electrode of claim 8, a negative electrode, and an electrolyte.
